# EUROPEAN PATENT SPECIFICATION

(11) **EP 1 693 988 B1**
(45) Date of publication and mention of the grant of the patent: **19.02.2014**
(21) Application number: 04789874.7
(22) Date of filing: 26.10.2004
(51) Int. Cl.: H04W 48/16

(54) **A METHOD OF THE SUBSCRIBER TERMINAL SELECTING THE PACKET DATA GATEWAY IN THE WIRELESS LOCAL NETWORK**
VERFAHREN, WODURCH DAS TEILNEHMERENDGERÄT DAS PAKETDATEN-GATEWAY IN DEM DRAHTLOSEN LOKALEN NETZWERK AUSWÄHLT
PROCEDE DE SELECTION PAR UN TERMINAL D'ABONNE DE LA PASSERELLE DE PAQUETS DE DONNEES DANS UN RESEAU LOCAL SANS FIL

(30) Priority: 12.12.2003 CN 200310121351
(43) Date of publication of application: 23.08.2006
(73) Proprietor: Huawei Technologies Co., Ltd., Shenzhen, Guangdong Province 518129 (CN)
(72) Inventor: ZHANG, Wenlin, Shenzhen, Guangdong 518129 (CN); HUANG, Yingxin, Shenzhen, Guangdong 518129 (CN)
(74) Representative: Körber, Martin Hans
(86) International application number: PCT/CN2004/001215
(87) International publication number: WO 2005/057858

(56) References cited:
- WO-A1-03/090375
- WO-A2-03/015360
- CN-A- 1 411 239
- CN-A- 1 452 353
- "3rd Generation Partnership Project; Technical Specification Group Services and System Aspects; 3GPP system to Wireless Local Area Network (WLAN) Interworking; System Description (Release 6)", 3GPP STANDARD; 3GPP TS 23.234, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V2.3.0, 1 November 2003 (2003-11-01), pages 1-81, XP050381069,
- CN4: "Enhancement of description for error codes for Create PDP Context response message", 3GPP DRAFT; 29.060-412R1_A_N4-030665, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG CN, no. Finland; 20030610, 10 June 2003 (2003-06-10), XP050055771, [retrieved on 2003-06-10]

## Description

### Field of the Technology

The present invention relates to wireless access techniques, and particularly to a method for a User Equipment (UE) of Wireless Local Area Network (WLAN) selecting a Packet Data Gateway (PDG).

### Background of the Invention

Along with the development of the society, users' requirements on the wireless access rate are becoming higher and higher. As WLAN is able to provide a higher wireless access rate of data in a relatively small area, WLAN has been widely used nowadays. WLAN involves various kinds of techniques, the most extensively used technical standard of which is IEEE 802.11b, whose frequency band is 2.4GHz and data transmission rate is up to 11 Mbps. Other technical standards using the same frequency band include IEEE 802.11g and Bluetooth, wherein the data transmission rate of IEEE 802.11 g is up to 54Mbps. Other standards of WLAN, such as IEEE 802.11a and ETSI BRAN Hiperlan2, use the frequency band of 5GHz, and the transmission rate of which can be up to 54 Mbps as well.

Although WLAN involves various kinds of wireless access techniques, most WLAN techniques utilize IP data packets for data transmission. The specific WLAN access technique adopted by a wireless IP network is usually transparent to the upper IP level. Such a wireless IP network is usually configured with Access Points (AP) for implementing wireless access of UEs, and with controlling and connecting devices for implementing IP data transmission.

Along with the appearance and development of WLAN, the inter-working of WLAN with various wireless mobile communication networks, such as GSM, CDMA, WCDMA, TD-SCDMA, and CDMA2000 has becoming the focus of researches. In accordance with the 3GPP (3^{rd} Generation Partner Project) standards, UE is not only able to connect with Internet and Intranet via the access network of WLAN, but also able to connect with the home network and visiting network of a 3GPP system via the WLAN access network.

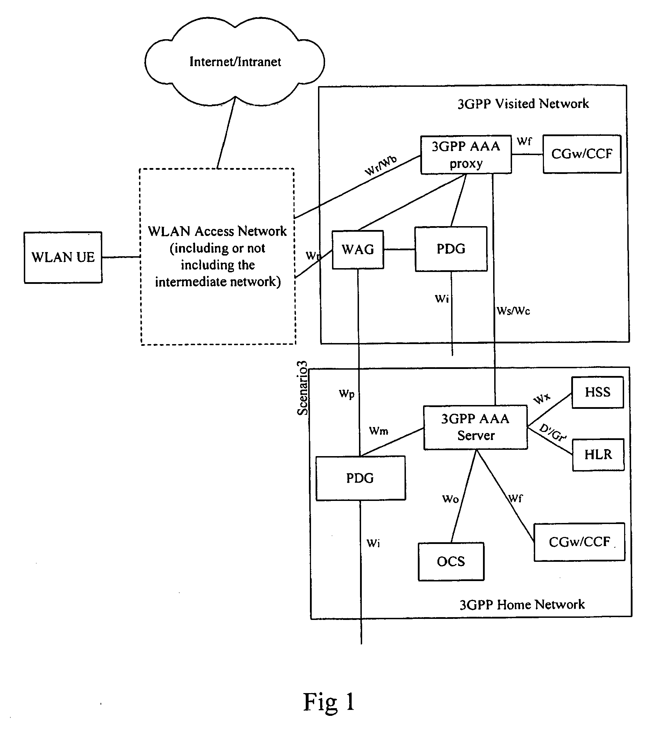

Figure 1 is a schematic diagram illustrating the architecture of the networking of WLAN system and 3GPP system under roaming conditions. When a WLAN UE accesses the network in a roaming state, it is able to connect to the visiting network of the 3GPP system via the WLAN access network. And as some entities of the 3GPP visiting network are connected with some corresponding entities of the 3GPP home network, for instance, the 3GPP Authentication, Authorization and Accounting (AAA) Proxy in the 3GPP visited network is connected to the 3GPP AAA Server in the 3GPP home network, the WLAN Access Gateway (WAG) in the 3GPP visited network is connected to the Packet Data Gateway (PDG) in the 3GPP home network, and etc., the WLAN UE is able to access the 3GPP home network via the said connections. Through the inter-working of the WAG and the PDG shown in Figure 1 the Packet Switching (PS) domain service of 3GPP, i.e. the Inter-working Scenario 3 services in a 3GPP network is implemented.

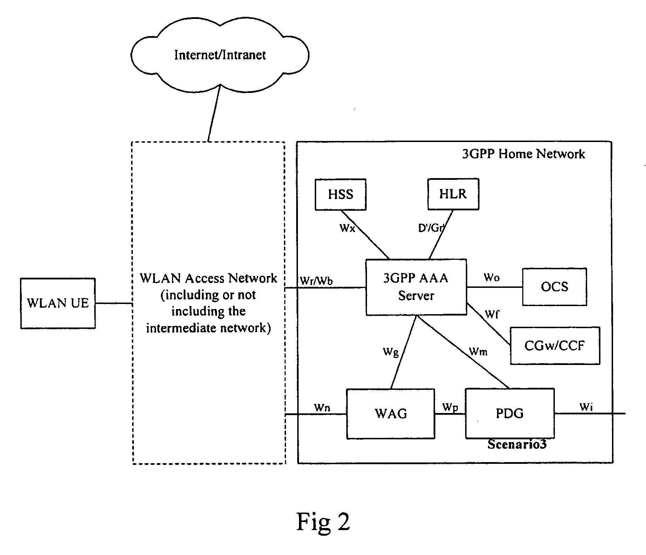

Figure 2 is a schematic diagram illustrating the architecture of the networking of WLAN system and 3GPP system under non-roaming conditions. When a WLAN UE accesses the network locally, it will get connected directly to the 3GPP home network via the WLAN access network. Through the inter-working of the WAG and the PDG shown in Figure 2 the 3GPP PS domain service, i.e. the Scenario 3 services in the 3GPP home network is implemented.

As shown in Figure 1 and Figure 2, a 3GPP system primarily comprises Home Subscriber Server (HSS)/ Home Location Register (HLR), 3GPP AAA Server, 3GPP AAA Proxy, WAG, PDG, Charging Gateway (CGw)/Charging information Collecting Function (CCF) and Online Charging System (OCS). WLAN UE, WLAN access network, and all the entities of the 3GPP system together construct a 3GPP-WLAN inter-working network, which can be used as a WLAN service system. In this service system, 3GPP AAA Server is in charge of the authentication, authorization, and accounting for a WLAN UE, collecting the charging information sent from the WLAN access network and transferring the said charging information to the charging system; PDG is in charge of the transmission of the user's data from the WLAN access network to the 3GPP network or other packet switching networks; and the charging system is in charge of receiving and recording the user's charging information transferred from the network, wherein OCS takes charge of instructing the network to periodically transmit online charging information in accordance with the expenses of the online charged users, meanwhile making statistics and controlling the network.

In the non-roaming case, when a WLAN UE desires to access the Internet/Intranet directly, the WLAN UE can access to the Internet/Intranet via the WLAN access network after accomplishing the authentication process with AAA server (AS) via the WLAN access network. If the WLAN UE desires to access the services of 3GPP PS domain as well, it should further request the services of Scenario 3 from the 3GPP home network. The method for requesting a Scenario 3 services is as follows:

The WLAN UE first provides an identifier of the access point name (W-APN) of the service that the WLAN UE requests to a Domain Name Server (DNS). The DNS may be a third-party public device or a public domain name service device private to the wireless network. The DNS accepting the request provides the corresponding IP address(es) of one or a plurality of PDGs by resolving the W-APN identifier provided by the WLAN UE, and returns the IP addresses to the WLAN UE. The WLAN UE sends a request for setting up a tunnel connection to a PDG corresponding to one of the IP addresses obtained from the DNS. The PDG receiving the tunnel connection request from the WLAN UE contacts with AS, which is in charge of making service identity checking and authorization to the WLAN UE. If the access authentication succeeds, the PDG that has received the connection request of the WLAN UE will set up a tunnel connection with the WLAN UE that has sent the request, thereby implementing the application of the Scenario 3 services. If the access authentication fails, the PDG receiving the request for connection from the WLAN UE will notify the WLAN UE that the access authentication has failed.

In the roaming case, if a WLAN UE desires to access the Internet/Intranet directly, the WLAN UE will make a request to the 3GPP home network via the 3GPP visited network for accessing the Internet/Intranet. After a successful access authentication, the WLAN UE can access Internet/Intranet via the WLAN access network. If the WLAN UE desires to request a Scenario 3 services as well, the method for requesting a Scenario 3 services is as follows:
the WLAN UE first provides a W-APN identifier of the service that the WLAN UE requests to a DNS. The DNS receiving the request provides the IP address(es) of one or a plurality of corresponding PDGs by resolving the W-APN identifier provided by the WLAN UE, and returns the addresses to the WLAN UE. The WLAN UE sends to a PDG corresponding to one of the IP addresses obtained from the DNS a request for setting up a tunnel connection. The PDG receiving the connection request from the WLAN UE contacts with the AS of the current network, which will further contact with the AS of the home network of the WLAN UE for service identity checking and authorization to the WLAN UE. If the access authentication succeeds, the PDG that has received the connection request of the WLAN UE will set up a tunnel connection with the WLAN UE that has sent the request, thereby implementing the application of the Scenario 3 services. If the access authentication fails, the PDG that has received the request for connection from the WLAN UE will notify the WLAN UE that the access authentication has failed.

After receiving the notification of an unsuccessful authentication from the PDG, the WLAN UE will contact with the DNS again, requesting the DNS to resolve W-APN to obtain the IP addresses of PDGs in the home network in accordance with the requested service. The DNS provides one or a plurality of IP addresses of PDGs in the home network of the UE by resolving the W-APN provided by the UE and returns the addresses to the WLAN UE. The WLAN UE will send a request for setting up a tunnel connection once again to a PDG corresponding to one of the IP addresses. The PDG that has received the connection request from the WLAN UE contacts the AS of the current network, which will further contact the AS of the home network of the WLAN UE for service identity checking and authorization to the WLAN UE. If the access authentication succeeds, the PDG that has received the connection request of the WLAN UE will set up a tunnel connection with the WLAN UE that has sent the request, thereby implementing the application of the Scenario 3 services.

The drawbacks of the above described method lie in: when a WLAN UE requests the service of a PDG in the network, if the request fails, the PDG will only notify the WLAN UE that the access fails. Thus the WLAN UE will not know the specific reason for failure. In this case, if the WLAN UE is roaming, it will directly contact with the DNS and re-routes to the home network to select the needed PDG, which leads to extra signaling processes and will further bring unnecessary occupations of network resources.

Document 1 (3rd Generation Partnership Project; Technical Specification Group Services and System Aspects; 3GPP system to Wireless Local Area Network (WLAN) Interworking; System Oescription (Release 6)", 3GPP STANDARD; 3GPP TS 23_234) discloses a Redirection process of a UE which is not authorised to access a requested W-APN through a selected PDG.

Document 2(CN4: "Enhancement of description for error codes for Create PDP Context response message" , 3GPP DRAFT; 29.060-412R1_A_N4-030665, 3RD GENERATION PARTNERSHIP PROJECT (3GPP)) discloses a response to a Create PDP Context Request has the Cause value indicates if a PDP context has been created in the GGSN or not and discloses some examples of the Cause value.

### Summary of the Invention

In view of the above, the object of this invention is to provide a method for PDG re-selection that a WLAN UE will be able to re-select a PDG when fails to access.

To attain the above object, the solution in accordance with this invention is implemented as follows: a method for a WLAN UE selecting a PDG as defined in claim 1.

In accordance with this invention, when a WLAN UE fails to access, the PDG will return a message containing the cause value of failure to the WLAN UE that has sent the request such that the WLAN UE could perform different operations to select a PDG according to the specific failure cause value in the message.

### Brief Description of the_Drawings

Figure 1 is a schematic diagram illustrating the architecture of the inter-working network of WLAN and 3GPP system under roaming conditions;
Figure 2 is a schematic diagram illustrating the architecture of the inter-working network of WLAN and 3GPP system under non-roaming conditions;
Figure 3 is the flowchart for a WLAN UE to select a PDG in accordance with the preferred embodiment of the present invention.

### Detailed Description of the Invention

In order to make the solution in accordance with this invention clear, this invention is hereinafter described in more detail with reference to the accompanying drawings.

The idea of this invention is: when the WLAN UE fails to access a PDG in the network, the PDG will return to the WLAN UE a message containing the cause value of failure; after receiving this message containing the cause value of failure, the WLAN UE will perform different operations to re-select a PDG according to the specific cause value of failure.

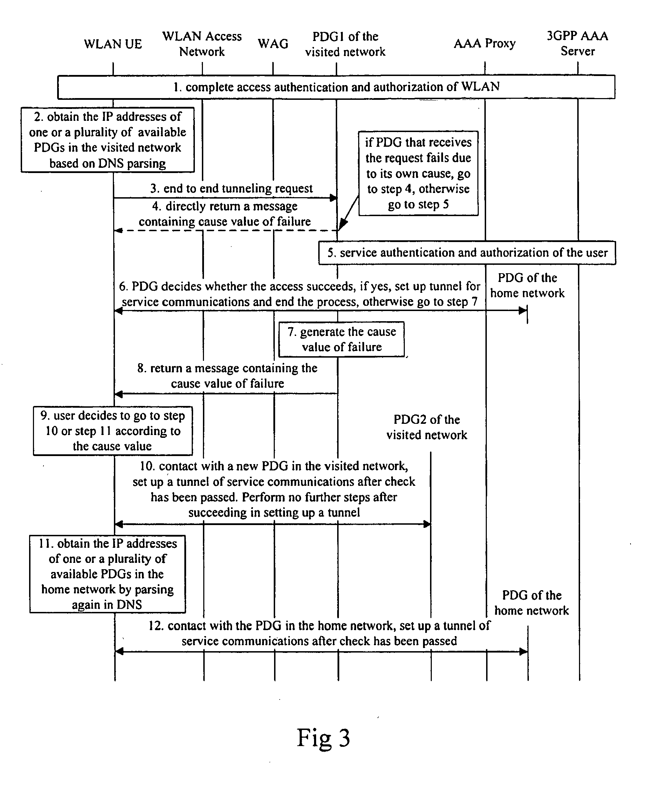

Figure 3 is the flowchart for a WLAN UE to select a PDG in accordance with the preferred embodiment of this invention.

Step 1: when a WLAN UE accesses the network, it should pass the basic authentication and authorization process first. After this authentication and authorization process, the WLAN UE may visit the Internet/Intranet via the access network.

Step 2: when the WLAN UE desires to use a 3GPP PS service in the visited network, the WLAN UE first providing the W-APN identifier of the requested services to a DNS. The DNS that has received the request returns to the WLAN UE the IP addresses of one or a plurality of PDGs, where the IP addresses of one or a plurality of PDGs may be the IP addresses of one or a plurality of PDGs acquired through DNS query based on the W-APN identifier provided by the WLAN UE, or the IP addresses saved in the buffer of the DNS itself.

Typically, the DNS will save the IP addresses acquired through resolving in the buffer for a pre-set period of time, and when there is a request from other WLAN UE for resolving the same W-APN, DNS will merely return the IP addresses of the PDGs saved in its own buffer to the WLAN UE.

Step 3: the WLAN UE sending a request for setting up a tunnel connection to the PDG corresponding to one of the IP addresses obtained from the DNS.

If the PDG is unable to accept the request of the WLAN UE after receiving the message of the request for setting up a tunnel connection from the WLAN UE due to the limitation of its own flow volume, or a temporary management control, or a mismatching of versions of the interactive protocols, go to Step 4, otherwise go to Step 5.

If the WLAN UE does not receive any response in a pre-set period of time, for instance, the PDG may hang up, the WLAN UE will go to Step 10, i.e. just try the IP addresses of other PDGs returned by the DNS which have not been tried yet.

Step 4: before the authentication and authorization, the PDG which has received the request sending the message containing the cause value of failure as the PDG is abnormal directly to the WLAN UE requesting to access, and directly goes to Step 9.

Step 5: the PDG which has received the connection request from the WLAN UE making such operations as the service identity checking and authorization of the WLAN UE through interaction with the AAA server in the home network of the WLAN UE.

Step 6: the PDG judging, according to the information returned by AAA, whether to permit the WLAN UE to access, if permit, the PDG which has received the connection request of the WLAN UE setting up a tunnel connection with the WLAN UE that has sent the request, providing the WLAN UE with the requested service, and thereby implementing the application of a certain 3GPP PS domain service and ending this process, if not permit, go to Step 7.

Step 7: the PDG generating the cause value of the access failure; if the WLAN UE is roaming , the cause value of the failure comprises that the PDG selected by the WLAN UE is abnormal, or the currently visited network does not support the WLAN UE to use the requested service in the visited network, or the WLAN UE has not subscribed to the requested services; if the WLAN UE is in the non-roaming case, the cause value of failure comprises that the PDG selected by the WLAN UE is abnormal, or the WLAN UE has not subscribed to the requested services.

Step 8: the PDG returning the failure message containing the cause value of failure to the WLAN UE which has made the connection request.

Step 9: the WLAN UE which has received the failure message containing the cause value of failure judging based on the content of the cause value of failure in the message, if the cause value of failure is that the PDG selected by the WLAN UE is abnormal, performs Step 10, if the cause value of failure is that the currently visited network does not support the WLAN UE to use the requested service in the visited network, performs Step 11, if the cause value of failure is that the WLAN UE has not subscribed to the requested services, the WLAN UE will go to other processing procedures, such as, carrying out an subscribing operation or giving up, and ending this process.

Step 10: the WLAN UE first judging whether there are in itself the said plurality of IP addresses obtained through DNS query, if yes, the WLAN UE will select another IP address, and send a request for setting up a tunnel connection to the PDG corresponding to the re-selected IP address; then the PDG which has received the connection request of the WLAN UE makes further processing to the WLAN UE, such as service identity checking and authorization, by the AAA of the home network of the WLAN UE, if the WLAN UE is permitted to access, the PDG which has accepted the connection request of the WLAN UE setting up a tunnel connection with the WLAN UE which has sent the request, providing the WLAN UE with the requested services, thereby implementing the application of a certain 3GPP PS domain services, and ending this process. In this way, the WLAN UE avoids to be redirected to the PDG of the home network, making full use of the IP addresses of a number of PDGs returned by the DNS in the first process of DNS query. If the access authentication does not succeed, return to Step 7.

If the WLAN UE receives only one IP address returned by DNS, the WLAN UE will judge whether the WLAN UE itself is roaming, if yes, perform Step 11, otherwise end this process.

Step 11: the WLAN UE performing the DNS query once again for the IP addresses of the PDGs in the home network according to the requested services. The DNS resolving W-APN and getting the IP addresses of one or a plurality of PDGs in the home network, and returning the addresses to the WLAN UE. The WLAN UE sending a request for setting up a tunnel connection to the PDG corresponding to one of the IP addresses acquired from the DNS.

Step 12: after completing the processing of service identity checking and authorization of the WLAN UE by AAA server of the home network of the WLAN UE, the PDG which has accepted the connection request of the WLAN UE setting up a tunnel connection with the WLAN UE which has sent the request, providing the WLAN UE with the requested service, thereby implementing the application of a certain 3GPP PS domain service, and ending this process.

The above messaging process may be implemented by the existing Internet protocol-Layer 2 Tunnel Setup Protocol (L2TP). In the message format of the failure message returned by L2TP, there are a field of result code and a field of error code. By using different combinations of the two fields, the returned causes of failure in this invention can be differentiated.

For instance, if the WLAN UE learns that the value of the result code is "use without authorization" and the value of the error code is that there is no agreement in the currently visited network for the service requested by the WLAN UE, the WLAN UE will just re-direct to the PDG of the home network; if the WLAN UE learns that the value of the result code is "use without authorization" and the value of the error code is that the user has not subscribed to the service, the WLAN UE will go to other processing procedures after receiving this message, for example, making subscribing operation or giving up; if the WLAN UE learns that the value of the result code is "general error" and the value of the error code is "try another", the WLAN UE believes that the PDG itself is abnormal, in this case, the WLAN UE needs not re-direct to the PDG of the home network, instead it will try to set up a connection with another PDG in the visiting network so as to save the signaling required for redirecting to the home network.

In addition, the protocol family of IP Security (IPsec) can also be used as the tunnel protocol as well, wherein the Internet Key Exchange (IKE) protocol can also be used as the bearing protocol in this invention. By utilizing the reserved fields in these protocols or making appropriate extensions thereto, the functions of this solution can be implemented.

The Internet Generic Routing Encapsulation (GRE) protocol is an encapsulation protocol supporting tunnel connections. The information about the cause of failure in this invention can be put into an IP packet and then encapsulated directly by the GRE protocol so as to implement the tunnel communications between the WLAN UE and PDG. For a better performance in security, it is recommended that the GRE protocol be used together with the IP Security protocol.

The foregoing description is only an exemplary embodiment of this invention and is to be regarded as illustrative rather than restrictive. The protection scope of this invention is established by the following claims.

## Claims

1. A method for a Wireless Local Area Network, WLAN, User Equipment, UE, selecting a Packet Data Gateway, PDG, the method comprises the steps of:
a. the said WLAN UE obtaining (2) the IP addresses of one or a plurality of PDGs via a DNS, based on the W-APN identifier constructed by the user, selecting one of the obtained IP addresses, and sending a request for setting up a tunnel connection to a PDG corresponding to the selected IP address;
b. the said PDG receiving the connection request of the said WLAN UE and judging (6) whether to permit the said WLAN UE that has sent the request to access, and if yes, setting up a tunnel connection with the said WLAN UE that has sent the request, providing the said WLAN UE with the requested service, and ending the process; otherwise sending a message containing a cause value of failure to the said WLAN UE that has requested to access, and going to Step c, the cause value indicates that the PDG selected by the said WLAN UE is abnormal;
c. the said WLAN UE first judging whether the said WLAN UE itself has the said plurality of IP addresses obtained by the DNS query, and if yes then, the said WLAN UE selecting another IP address, sending a request for setting up a tunnel connection to the PDG corresponding to the newly selected IP address, and then continuing with Step b; otherwise the WLAN UE further judging whether the said WLAN UE itself is in the roaming case, and if yes then, performing the DNS query once again to obtain the IP address of the PDG in the home network in accordance with the service requested, the DNS obtaining the IP addresses of one or a plurality of PDGs in the home network by DNS query according to the W-APN identifier provided by the WLAN UE before returning the addresses to the WLAN UE, and then the said WLAN UE continuing with the subsequent steps, otherwise ending this process.

2. A method according to Claim 1, wherein the said message containing the cause value of failure returned by the PDG to the said WLAN UE in Step b is carried by L2TP (Layer 2 Tunneling Protocol), or Internet Key Exchange (IKE) Protocol, or GRE (Generic Routing Encapsulation) protocol, or GRE protocol and IKE Protocol.

3. A method according to Claim 1, wherein the said IP addresses of one or a plurality of PDGs obtained by the DNS in Step a are acquired through DNS resolving, or from the buffer of DNS.

## Patentansprüche

1. Verfahren für ein Benutzergerät UE des drahtlosen lokalen Netzwerks WLAN zum Auswählen eines "Packet Data Gateway" PDG, wobei das Verfahren die folgenden Schritte umfasst:
a. das WLAN-UE erhält (2) die IP-Adressen eines oder mehrerer PDG über einen DNS auf der Basis der durch den Benutzer konstruierten W-APN-Kennung, wählt eine der erhaltenen IP-Adressen aus und sendet eine Anforderung des Aufbaus einer Tunnelverbindung zu einem der ausgewählten IP-Adresse entsprechenden PDG;
b. das PDG empfängt die Verbindungsanforderung des WLAN-UE und beurteilt (6), ob das WLAN-UE, das die Zugangsanforderung gesendet hat, zuzulassen ist, und baut, wenn ja, eine Tunnelverbindung mit dem WLAN-UE, das die Anforderung gesendet hat, auf, stellt dem WLAN-UE den angeforderten Dienst bereit und beendet den Prozess; und sendet andernfalls eine Nachricht, die einen Ursachenwert des Fehlschlags enthält, zu dem WLAN-UE, das Zugang angefordert hat, und geht zu Schritt c, wobei der Ursachenwert angibt, dass das von dem WLAN-UE ausgewählte PDG abnorm ist;
c. das WLAN-UE beurteilt zuerst, ob das WLAN-UE selbst die durch die DNS-Anfrage erhaltenen mehreren IP-Adressen besitzt, und wenn ja, wählt das WLAN-UE dann eine andere IP-Adresse aus, sendet eine Anforderung zum Aufbau einer Tunnelverbindung zu dem PDG, das der neuausgewählten IP-Adresse entspricht, und fährt dann mit Schritt b fort; andernfalls beurteilt das WLAN-UE ferner, ob sich das WLAN-UE selbst im Roaming-Fall befindet und führt, wenn ja, dann die DNS-Anfrage nochmals durch, um die IP-Adresse des PDG im Heimatnetzwerk gemäß dem angeforderten Dienst zu erhalten, wobei der DNS die IP-Adressen eines oder mehrerer der PDG im Heimatnetzwerk durch DNS-Anfrage gemäß der W-APN-Kennung erhält, die durch das WLAN-UE bereitgestellt wird, bevor die Adressen an das WLAN-UE zurückgegeben werden, und das WLAN-UE dann mit den nachfolgenden Schritten fortfährt und andernfalls dieser Prozess beendet wird.

2. Verfahren nach Anspruch 1, wobei die im Schritt b von dem PDG an das WLAN-UE zurückgegebene Nachricht, die den Ursachenwert des Fehlschlags enthält, durch das "Layer 2 Tunneling Protocol" L2TP oder das Protokoll des "Internet Key Exchange" IKE oder das Protokoll der "Generic Routing Encapsulation" GRE oder das GRE-Protokoll und das IKE-Protokoll geführt wird.

3. Verfahren nach Anspruch 1, wobei die IP-Adressen eines oder mehrerer der PDG, die durch den DNS in Schritt a erhalten werden, durch DNS-Auflösung oder aus dem Puffer des DNS beschafft werden.

## Revendications

1. Procédé destiné à la sélection par un Equipement Utilisateur UE (User Equipment) sur un Réseau Local Sans Fil, WLAN (Wireless Local Area Network), d'une Passerelle de Données par Paquets, PDG (Packet Data Gateway), le procédé comprenant les étapes suivantes :
a. l'obtention (2) par l'UE WLAN des adresses IP de l'une ou d'une pluralité de PDG via un DNS (Domain Name Server, Serveur de nom de domaine), sur la base de l'identifiant W-APN construit par l'utilisateur, la sélection de l'une des adresses IP obtenues, et l'envoi d'une demande d'établissement d'une connexion par tunnel à une PDG correspondant à l'adresse IP sélectionnée ;
b. la réception par ladite PDG de la demande de connexion dudit UE WLAN et l'évaluation (6) du fait de permettre l'accès audit UE WLAN ayant envoyé la demande, et si oui, l'établissement d'une connexion par tunnel audit UE WLAN ayant envoyé la demande, la fourniture audit UE WLAN du service demandé, et l'interruption du processus ; dans le cas contraire, l'envoi d'un message contenant une valeur de cause d'échec audit UE WLAN ayant demandé l'accès, et le passage à l'Etape c, la valeur de cause indiquant que la PDG sélectionnée par ledit UE WLAN est anormale ;
c. l'évaluation en premier lieu par ledit UE WLAN du fait de savoir si ledit UE WLAN lui-même dispose de ladite pluralité d'adresses IP obtenues par la requête DNS et si oui, la sélection par ledit UE WLAN d'une autre adresse IP, l'envoi d'une demande d'établissement d'une connexion par tunnel à la PDG correspondant à l'adresse IP nouvellement sélectionnée, puis la poursuite par l'Etape b ; dans le cas contraire, l'évaluation en outre par l'UE WLAN du fait de savoir si ledit UE WLAN lui-même est dans le cas d'itinérance, et si oui, l'exécution une fois encore de la requête DNS afin d'obtenir l'adresse IP de la PDG dans le réseau local conformément au service demandé, le DNS obtenant les adresses IP de l'une ou d'une pluralité de PDG dans le réseau local au moyen d'une requête DNS conformément à l'identifiant W-APN fourni par l'UE WLAN avant de renvoyer les adresses à l'UE WLAN, puis la poursuite par ledit UE WLAN des étapes suivantes et dans le cas contraire, l'interruption de ce processus.

2. Procédé selon la revendication 1, dans lequel ledit message contenant la valeur de cause de l'échec renvoyée par la PDG à ladite UE WLAN lors de l'Etape b est acheminé par un protocole L2TP (Layer 2 Tunneling Protocol, Protocole de Tunnellisation de Couche 2), ou par un Protocole d'Echange de Clés Internet (IKE, Internet Key Exchange), ou par un protocole GRE (Generic Routing Encapsulation, Encapsulation de Routage Générique), ou par un protocole GRE associé à un protocole IKE.

3. Procédé selon la revendication 1, dans lequel lesdites adresses IP de l'une ou d'une pluralité de PDG obtenues par le DNS lors de l'Etape a sont acquises par résolution DNS, ou en provenance du tampon du DNS.
